# EUROPEAN PATENT APPLICATION

(11) **EP 4 621 206 A1**
(43) Date of publication of application: **24.09.2025**
(21) Application number: 25159406.5
(22) Date of filing: 21.02.2025
(51) Int. Cl.: F02D 19/06, F02D 19/08, F02D 41/00, F02D 41/40, F02M 21/02

(54) **ENGINE DEVICE**

(30) Priority: 18.03.2024 JP 2024042196
(71) Applicant: Yanmar Holdings Co., Ltd., Osaka-shi, Osaka (JP)
(72) Inventor: TOSHINAGA, Kazuteru, Osaka (JP); MATSUNAGA, Daichi, Osaka (JP); ASAI, Go, Osaka (JP)
(74) Representative: Novagraaf International SA

(57) **Abstract**

[Problem] To provide an engine device capable of stably burning a main fuel that is a low GHG fuel, which emits less greenhouse gas, by applying one fuel injection valve that individually injects two types of fuels.

[Solution] An engine device 1 includes an engine 2 that is operated by burning two types of fuels, and one fuel injection valve 7 that can individually inject the two types of fuels to the engine 2. In the engine device 1, at the time of injecting the main fuel including a low GHG fuel, which emits less greenhouse gas than a petroleum-based fuel, and the hydrocarbon-based auxiliary fuel as the two types of fuels to the engine 2 by the fuel injection valve 7, the control device 8 controls 90% of the total injection volume of the auxiliary fuel to be injected before 50% of the total injection volume of the main fuel is injected in one cycle of the engine 2.

## Description

### TECHNICAL FIELD

The present invention relates to an engine device including an engine that is operated by burning two types of fuels and one fuel injection valve that can individually inject the two types of fuels to the engine.

### BACKGROUND ART

Conventionally, there is an engine device including an engine that is operated by burning two types of fuels, and the two types of fuels need to be individually supplied to such an engine. Accordingly, the engine device includes one fuel injection valve that can individually inject the two types of fuels to the engine.

For example, Patent Document 1 discloses a fuel injection device of an internal combustion engine, which injects first and second fuels different from each other from a common fuel injection valve into a cylinder. The fuel injection valve includes: a valve main body provided with a first valve chamber on the center side, a second valve chamber partitioned on the outer circumferential side by a partition wall with respect to the first valve chamber, and first and second injection holes respectively communicating with the first valve chamber and the second valve chamber at a tip end portion; a first valve element disposed in the first valve chamber so as to open and close the first injection hole; a second valve element disposed in the second valve chamber so as to open and close the second injection hole; a first driving mechanism that drives the first valve element to open and close; and a second driving mechanism that drives the second valve element to open and close independently of driving of the first valve element by the first driving mechanism. The first fuel is introduced into one valve chamber of the first valve chamber and the second valve chamber, and the second fuel is introduced into the other valve chamber.

### PRIOR ART DOCUMENT

### PATENT DOCUMENT

Patent Document 1: Japanese Unexamined Patent Publication No. 2009-057884

### SUMMARY OF INVENTION

### TECHNICAL PROBLEM

In the conventional technology as disclosed in Patent Document 1, the fuel injection device is substantially provided with two sets of common rail systems combined with each other, and two types of fuels are individually injected from one fuel injection valve by using these common rail systems. However, the conventional technology described above may have difficulty in manufacturing due to complicated and precise configuration causing costs to be commercially expensive compared with another technology in which two types of fuels are individually injected from two fuel injection valves by using two sets of common rail systems.

Additionally, Patent Document 1 only discloses a control method and a usage for injecting two types of fuels in a limited manner; however, does not disclose a case where a main fuel that is a low green house gas (GHG) fuel such as ammonia or alcohol, which emits less greenhouse gas and an auxiliary fuel that is a hydrocarbon-based fuel such as light oil are injected as two types of fuel injections by the conventional technology described above. Therefore, there is a problem of improving instability of combustion of the flame-retardant main fuel or promoting a decrease in greenhouse gas emissions.

The present invention is intended to provide an engine device capable of stably burning a main fuel that is a low GHG fuel, which emits less greenhouse gas, by applying one fuel injection valve that individually injects two types of fuels.

### SOLUTION TO PROBLEM

In order to solve the problem above, an engine device of the present invention is an engine device including: an engine that is operated by burning two types of fuels; and one fuel injection valve that can individually inject the two types of fuels to the engine. At the time of injecting a main fuel including a low GHG fuel, which emits less greenhouse gas than a petroleum-based fuel, and a hydrocarbon-based auxiliary fuel as the two types of fuels by the fuel injection valve to the engine, 90% of a total injection volume of the auxiliary fuel is injected before 50% of a total injection volume of the main fuel is injected in one cycle of the engine.

### ADVANTAGEOUS EFFECTS OF INVENTION

According to the present invention, an engine device is provided that is capable of stably burning a main fuel that is a low GHG fuel, which emits less greenhouse gas, by applying one fuel injection valve that individually injects two types of fuels.

### BRIEF DESCRIPTION OF DRAWINGS

FIG. 1 is a schematic view illustrating an example of an engine device according to an embodiment of the present invention.
FIG. 2 is a schematic view illustrating an example of a fuel injection valve in the engine device according to the embodiment of the present invention.
FIG. 3 is a graph illustrating an example of the injection timing of a main fuel and an auxiliary fuel in the engine device according to the embodiment of the present invention.
FIG. 4 is a graph illustrating an example of the injection timing of the main fuel and the auxiliary fuel in the engine device according to a first modified example of the present invention.
FIG. 5 is a graph illustrating an example of the injection timing of the main fuel and the auxiliary fuel in the engine device according to a second modified example of the present invention.
FIG. 6 is a graph illustrating an example of the injection timing of the main fuel and the auxiliary fuel in the engine device according to a third modified example of the present invention.
FIG. 7 is a graph illustrating an example of the injection timing of the main fuel and the auxiliary fuel in the engine device according to a fourth modified example of the present invention.
FIG. 8 is a graph illustrating an example of the injection timing of the main fuel and the auxiliary fuel in the engine device according to a fifth modified example of the present invention.

### DESCRIPTION OF EMBODIMENTS

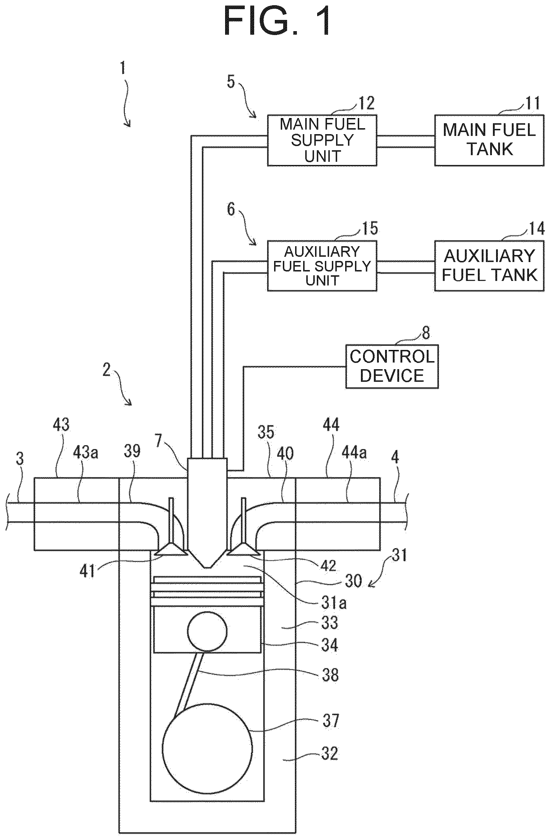

An engine device 1 according to an embodiment of the present invention will be described with reference to the drawings. As illustrated in FIG. 1, the engine device 1 includes an engine 2, an intake passage 3, an exhaust passage 4, a main fuel supply device 5, an auxiliary fuel supply device 6, a fuel injection valve 7, and a control device 8.

In the present embodiment, in particular, the engine 2 is configured to be operated by burning at least one of a main fuel including a low greenhouse gas (GHG) fuel such as ammonia or alcohol (for example, ethanol, butanol, and methanol), which emits less greenhouse gas than a petroleum-based fuel, and an auxiliary fuel, which is a hydrocarbon-based fuel such as light oil, kerosene, and heavy oil, in a combustion chamber 31a of each cylinder 31 formed of a cylinder 33 and a piston 34. In the engine device 1, the main fuel and the auxiliary fuel, and air are supplied to the combustion chamber 31a of each cylinder 31 of the engine 2, and a fuel-air mixture of the main fuel and air, a fuel-air mixture of the auxiliary fuel and air, or a fuel-air mixture of the main fuel, the auxiliary fuel, and air is generated in the combustion chamber 31a. In the engine device 1, the supply of the main fuel and the supply of the auxiliary fuel are controlled by the control device 8.

The main fuel supply device 5 includes a main fuel tank 11 and a main fuel supply unit 12.

The main fuel tank 11 is a tank in which the main fuel that is a low GHG fuel such as ammonia or alcohol, which emits less greenhouse gas, is filled from the outside and stored. The main fuel tank 11 is connected via the main fuel supply unit 12 to the fuel injection valve 7.

The main fuel supply unit 12 pressurizes the main fuel supplied from the main fuel tank 11 and supplies the pressurized main fuel to the fuel injection valve 7. The main fuel supply unit 12 may utilize a common rail system to pressurize and supply the main fuel, or may utilize a mechanically controlled device to pressurize and supply the main fuel.

The auxiliary fuel supply device 6 includes an auxiliary fuel tank 14 and an auxiliary fuel supply unit 15.

The auxiliary fuel tank 14 is a tank in which the auxiliary fuel that is a hydrocarbon-based fuel such as light oil, kerosene, and heavy oil is filled from the outside and stored, and the auxiliary fuel tank 14 is connected to the auxiliary fuel supply unit 15.

The auxiliary fuel supply unit 15 pressurizes the auxiliary fuel supplied from the auxiliary fuel tank 14 and supplies the pressurized auxiliary fuel to the fuel injection valve 7. The auxiliary fuel supply unit 15 may use a common rail system to pressurize and supply the auxiliary fuel, or may utilize a mechanically controlled device to pressurize and supply the auxiliary fuel.

The fuel injection valve 7 is disposed for each cylinder 31 of the engine 2 to supply the main fuel and the auxiliary fuel separately to the combustion chamber 31a of each cylinder 31. The fuel injection valve 7 is formed of, for example, an integral two-type fuel injector, and includes a main fuel injection unit 7a that injects the main fuel into the combustion chamber 31a and an auxiliary fuel injection unit 7b that injects the auxiliary fuel into the combustion chamber 31a. The fuel injection valve 7 is disposed in a cylinder head 35 so as to inject the main fuel and the auxiliary fuel from a location near the center in a radial direction of each combustion chamber 31a (cylinder 33). In the fuel injection valve 7, the injection timing, injection volume, injection pressure, injection frequency, and the like of the main fuel and the auxiliary fuel are controlled by the control device 8.

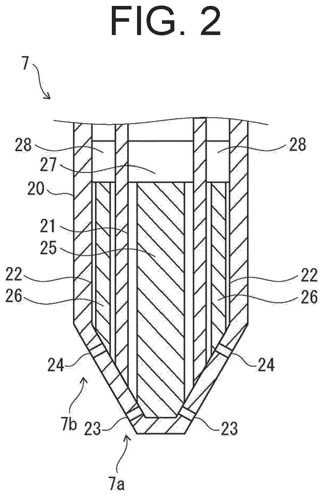

For example, as illustrated in FIG. 2, the fuel injection valve 7 that is the two-type fuel injector separately includes a first valve chamber 21 and a second valve chamber 22 for respectively supplying the main fuel and the auxiliary fuel to one valve main body 20 having a cylindrical shape, and separately includes a first injection hole 23 that allows the first valve chamber 21 to communicate with the outside and a second injection hole 24 that allows the second valve chamber 22 to communicate with the outside. The fuel injection valve 7 separately includes a first valve element 25 having a column-shape and slidable in the first valve chamber 21 and a second valve element 26 having a column-shape and slidable in the second valve chamber 22, and separately includes a first drive unit 27 that drives the first valve element 25 and a second drive unit 28 that drives the second valve element 26.

The main fuel injection unit 7a includes the first valve chamber 21, the first injection hole 23, the first valve element 25, and the first drive unit 27, and the auxiliary fuel injection unit 7b includes the second valve chamber 22, the second injection hole 24, the second valve element 26, and the second drive unit 28. The auxiliary fuel injection unit 7b functions as an ignition device that injects the auxiliary fuel to the fuel-air mixture of the main fuel and air that are compressed in the combustion chamber 31a or the compressed air and thereby ignites the mixture or the compressed air.

The first drive unit 27 drives the first valve element 25 in response to an electric signal from the control device 8 to slide the first valve element 25 in the first valve chamber 21 between a closed position at which the first injection hole 23 is closed and an open position at which the first injection hole 23 is opened. The second drive unit 28 drives the second valve element 26 in response to an electric signal from the control device 8 to slide the second valve element 26 in the second valve chamber 22 between a closed position at which the second injection hole 24 is closed and an open position at which the second injection hole 24 is opened.

The first valve chamber 21 is connected to the main fuel supply unit 12, the pressurized main fuel is supplied from the main fuel supply unit 12 to the first valve chamber 21, and the first valve element 25 opens the first injection hole 23, and thus the main fuel is injected from the first valve chamber 21 through the first injection hole 23 to the outside of the fuel injection valve 7. The second valve chamber 22 is connected to the auxiliary fuel supply unit 15, the pressurized auxiliary fuel is supplied from the auxiliary fuel supply unit 15 to the second valve chamber 22, and the second valve element 26 opens the second injection hole 24, and thus the auxiliary fuel is injected from the second valve chamber 22 through the second injection hole 24 to the outside of the fuel injection valve 7.

When the piston 34 moves toward a top dead point, the fuel injection valve 7 normally injects the main fuel into the combustion chamber 31a. Also, when the fuel-air mixture of the main fuel and air supplied into the combustion chamber 31a is compressed by the piston 34 moving toward the top dead point and the temperature and pressure thereof are increased, the fuel injection valve 7 injects the auxiliary fuel to the fuel-air mixture in the combustion chamber 31a, thereby igniting and burning the fuel-air mixture.

The engine 2 is, for example, a four-stroke engine, and includes the plurality of cylinders 31 and a crankcase 32 in a cylinder block 30. In FIG. 1, one of the cylinders 31 is illustrated and the others of the cylinders 31 are not illustrated. Each of the cylinders 31 includes the cylinder 33, the piston 34, and a cylinder head 35 as illustrated in FIG. 1.

The cylinder 33 is formed, for example, in a cylindrical shape in the cylinder block 30, and the piston 34 is slidably housed in the cylinder 33. The cylinder head 35 is attached to the upper side of the cylinder 33. The combustion chamber 31a is formed on the inner side of the cylinder 33 and the cylinder head 35. The cylinder head 35 is provided with the fuel injection valve 7 so that the fuel injection valve 7 injects the main fuel and the auxiliary fuel into each combustion chamber 31a from the radial center of each combustion chamber 31a (cylinder 33).

Each cylinder 33 of the plurality of cylinders 31 communicates with the crankcase 32, and a crankshaft 37 is rotatably supported by the crankcase 32. The piston 34 of each of the cylinders 31 is connected via a connecting rod 38 to the crankshaft 37, and reciprocating motion of the piston 34 is converted via the connecting rod 38 into rotary motion of the crankshaft 37.

The cylinder head 35 includes an intake port 39 and an exhaust port 40 that communicate with the combustion chamber 31a of the cylinder 33, and is provided with an intake valve 41 and an exhaust valve 42 that open and close the intake port 39 and the exhaust port 40, respectively, with respect to the combustion chamber 31a.

The intake port 39 is connected to an intake passage 3 to introduce air supplied from the intake passage 3 into the combustion chamber 31a. The exhaust port 40 is connected to an exhaust passage 4 to discharge exhaust gas generated in the combustion chamber 31a to the exhaust passage 4. When the intake valve 41 is opened, the air from the intake passage 3 can be taken into the combustion chamber 31a through the intake port 39. Meanwhile, when the exhaust valve 42 is opened, exhaust gas generated in the combustion chamber 31a can be discharged through the exhaust port 40.

The intake passage 3 is connected to the plurality of cylinders 31 of the engine 2 to supply the air compressed and cooled to each of the cylinders 31. The air is supplied from the intake passage 3 to the combustion chamber 31a of each cylinder 31 and the main fuel is supplied from the main fuel supply device 5 to the combustion chamber 31a of each cylinder 31. Thus, the fuel-air mixture of the main fuel and air is generated in the combustion chamber 31a of each cylinder 31. Alternatively, the auxiliary fuel is supplied from the auxiliary fuel supply device 6 to the combustion chamber 31a of each cylinder 31, and thus the fuel-air mixture of the auxiliary fuel and air is generated in the combustion chamber 31a of each cylinder 31. The intake passage 3 is connected, for example, via an intake manifold 43 to the engine 2. The intake manifold 43 includes a branch flow passage 43a branching into the plurality of cylinders 31, and each branch flow passage 43a is connected to each intake port 39.

The exhaust passage 4 is connected to the plurality of cylinders 31 of the engine 2, and allows exhaust gas generated in each of the cylinders 31 to flow therethrough and be discharged therefrom. The exhaust passage 4 is connected, for example, via an exhaust manifold 44 to the engine 2. The exhaust manifold 44 includes a branch flow passage 44a branching into the plurality of cylinders 31, and each branch flow passage 44a is connected to each exhaust port 40. The exhaust passage 4 may be provided with a treatment device for treating the exhaust gas flowing through the exhaust passage 4, for example, a selective reduction catalyst or an ammonia adsorption catalyst, on the downstream side in the exhaust direction.

The control device 8 is a computer such as an engine control unit (ECU) that controls operation of the engine 2, includes a CPU, a ROM, a RAM, and the like, and is configured to control each part of the engine 2. The control device 8 may store various programs for controlling the engine 2 and control the engine 2 by reading and executing the programs.

In the present embodiment, in particular, the control device 8 electrically controls the injection volume, the injection pressure, the injection timing, and the injection frequency of the main fuel by the main fuel injection unit 7a of the fuel injection valve 7, and electrically controls the injection volume, the injection pressure, the injection timing, and the injection frequency of the auxiliary fuel by the auxiliary fuel injection unit 7b. At this time, when controlling a predetermined total injection volume of the main fuel and a predetermined total injection volume of the auxiliary fuel to be injected toward the combustion chamber 31a of the engine 2 in each cycle of the engine 2, the control device 8 controls the injection volume and/or the injection timing of the main fuel and the injection volume and/or the injection timing of the auxiliary fuel so that 90% of the total injection volume of the auxiliary fuel is injected before 50% of the total injection volume of the main fuel is injected. The total injection volume of the main fuel may be determined by weight, volume, calorific value, or the like, and the total injection volume of the auxiliary fuel may be determined by weight, volume, calorific value, or the like.

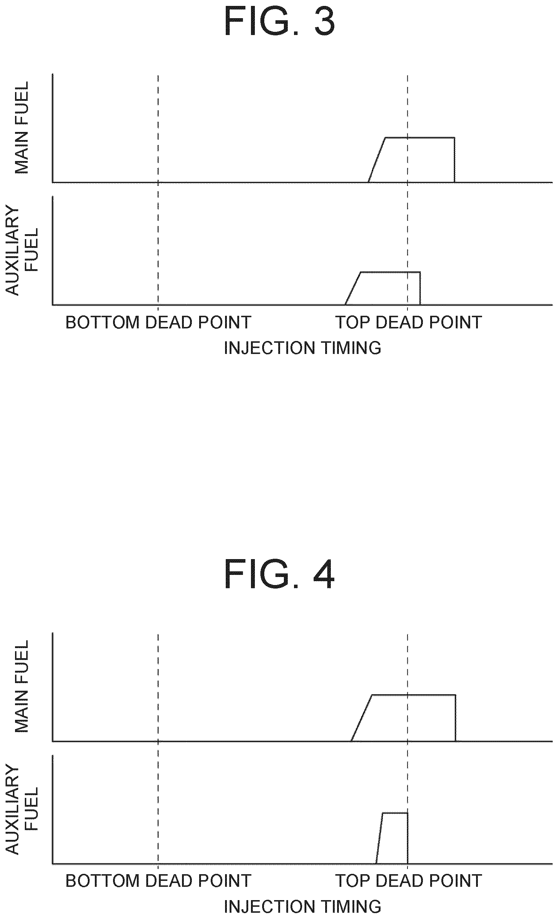

For example, as illustrated in FIG. 3, in injecting the main fuel into the combustion chamber 31a when the piston 34 reaches the top dead point in a compression stroke in each cylinder 31, the control device 8 controls the fuel injection valve 7 to complete the injection of 90% of the total injection volume of the auxiliary fuel before 50% of the total injection volume of the main fuel is injected. In the example illustrated in FIG. 3, the injection of the auxiliary fuel is started before the injection of the main fuel is started, and the main fuel is injected into the combustion chamber 31a in a state where the auxiliary fuel is compressed, ignited, and burned in the combustion chamber 31a. Therefore, the flame-retardant main fuel is easily burned.

As illustrated in FIG. 3, an example is provided in the embodiment described above in which the fuel injection valve 7 injects the main fuel before and after the piston 34 reaches the top dead point. However, the injection timing of the main fuel is not limited to this example as long as the injection of 90% of the total injection volume of the auxiliary fuel is completed before 50% of the total injection volume of the main fuel is injected. Alternatively, in another example, the fuel injection valve 7 may complete the injection of the total injection volume of the main fuel before the piston 34 reaches the top dead point, or may start the injection of the main fuel after the piston 34 reaches the top dead point.

As illustrated in FIG. 3, an example is provided in the embodiment described above in which the fuel injection valve 7 injects the auxiliary fuel before and after the piston 34 reaches the top dead point. However, the injection timing of the auxiliary fuel is not limited to this example as long as the injection of 90% of the total injection volume of the auxiliary fuel is completed before 50% of the total injection volume of the main fuel is injected. Alternatively, in another example, the fuel injection valve 7 may complete the injection of the total injection volume of the auxiliary fuel before the piston 34 reaches the top dead point, or may start the injection of the auxiliary fuel after the piston 34 reaches the top dead point.

As described above, according to the present invention, the engine device 1 includes the engine 2 that is operated by burning two types of fuels, and the single fuel injection valve 7 that can individually inject the two types of fuels to the engine 2. In the engine device 1, at the time of injecting the main fuel including a low GHG fuel, which emits less greenhouse gas than a petroleum-based fuel, and the hydrocarbon-based auxiliary fuel as the two types of fuels to the engine 2 by the fuel injection valve 7, the control device 8 controls 90% of the total injection volume of the auxiliary fuel to be injected before 50% of the total injection volume of the main fuel is injected in one cycle of the engine 2. For example, the main fuel includes ammonia or alcohol as the low GHG fuel.

Thus, according to the engine device 1 of the present invention, the main fuel and the auxiliary fuel can be injected from the radial center of the cylinder 33 (the combustion chamber 31a) by individually injecting the main fuel and the auxiliary fuel from the single fuel injection valve 7. Further, by injecting a large volume of the auxiliary fuel in the first half of the injection of the main fuel in one cycle of the engine 2, the flammable auxiliary fuel is mainly supplied in the first half of combustion to promote the combustion. Thereafter, the heat and flame due to the combustion of the auxiliary fuel promote combustion of the flame-retardant main fuel; therefore, stable combustion can be realized. As described above, according to the engine device 1, by applying the single fuel injection valve 7 that individually injects the two types of fuels, the main fuel that is a low GHG fuel, which emits less greenhouse gas can be stably burned.

Further, as a first modified example, as illustrated in FIG. 4, the control device 8 controls the fuel injection valve 7 to complete injection of 90% of the total injection volume of the auxiliary fuel before 50% of the total injection volume of the main fuel is injected while injecting the auxiliary fuel from the radial center of the combustion chamber 31a in a state where the fuel-air mixture of the main fuel and air is generated in each combustion chamber 31a of the engine 2 by injection of the main fuel. For example, in the example illustrated in FIG. 4, the injection of the main fuel is started and the fuel-air mixture of the main fuel and air is generated and compressed in each combustion chamber 31a; thereafter, the injection of the auxiliary fuel is started and the mixture of the main fuel is ignited in each combustion chamber 31a, and further the main fuel is injected into each combustion chamber 31a and burned therein.

Accordingly, by injecting the auxiliary fuel from the radial center of the combustion chamber 31a in a state where the mixture of the main fuel is generated in the combustion chamber 31a, the mixture of the main fuel is ignited by the auxiliary fuel and the flame is transmitted to the mixture of the main fuel. As a result, stable combustion can be realized.

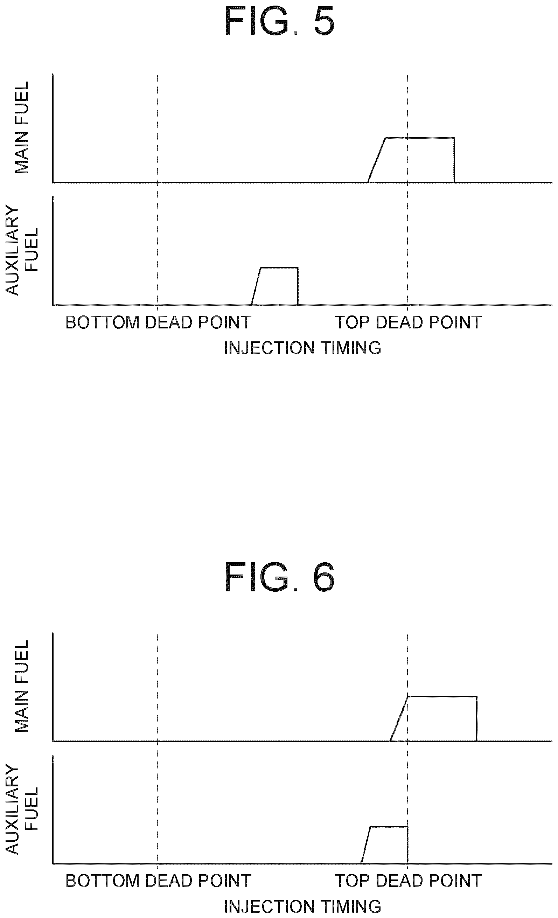

Alternatively, as a second modified example, as illustrated in FIG. 5, the control device 8 controls the fuel injection valve 7 to complete injection of 90% of the total injection volume of the auxiliary fuel before 50% of the total injection volume of the main fuel is injected while injecting the main fuel from the radial center of the combustion chamber 31a in a state where the fuel-air mixture of the auxiliary fuel and air is generated in each combustion chamber 31a of the engine 2 by injection of the auxiliary fuel. For example, in the example illustrated in FIG. 5, the injection of the auxiliary fuel is started and the fuel-air mixture of the auxiliary fuel and air is generated in each combustion chamber 31a; thereafter, the mixture of the auxiliary fuel is compressed and ignited. In this case, the injection of the main fuel is started and the main fuel is burned in each combustion chamber 31a.

Accordingly, by injecting the main fuel from the radial center of the combustion chamber 31a in a state where the mixture of the auxiliary fuel is generated in the combustion chamber 31a, the auxiliary fuel is ignited and combustion mainly by the auxiliary fuel is started; thereafter, the flame is transmitted to the main fuel by combustion of the auxiliary fuel. As a result, stable combustion can be realized.

Furthermore, as a third modified example, as illustrated in FIG. 6, the control device 8 controls the fuel injection valve 7 to complete injection of 90% of the total injection volume of the auxiliary fuel before 50% of the total injection volume of the main fuel is injected while injecting the main fuel from the radial center of the combustion chamber 31a in a state where the auxiliary fuel is ignited in each combustion chamber 31a of the engine 2 by injection of the auxiliary fuel. For example, in the example illustrated in FIG. 6, the injection of the auxiliary fuel is started and the fuel-air mixture of the auxiliary fuel and air generated in each combustion chamber 31a is compressed and ignited; thereafter, the injection of the main fuel is started and the main fuel is burned in each combustion chamber 31a.

Accordingly, by injecting the main fuel from the radial center of the combustion chamber 31a in a state where the auxiliary fuel is ignited and the flame is generated in the combustion chamber 31a, the flame is transmitted to the main fuel by combustion of the auxiliary fuel. As a result, stable combustion can be realized.

The fuel injection valve 7 may start the injection of the main fuel after completing the injection of the auxiliary fuel (injection of 100% of the total injection volume) as in the second modified example (see FIG. 5), or may start the injection of the main fuel after completing the injection of 90% of the total injection volume of the auxiliary fuel and before completing the injection of 100% of the total injection volume of the auxiliary fuel as in the third modified example (see FIG. 6).

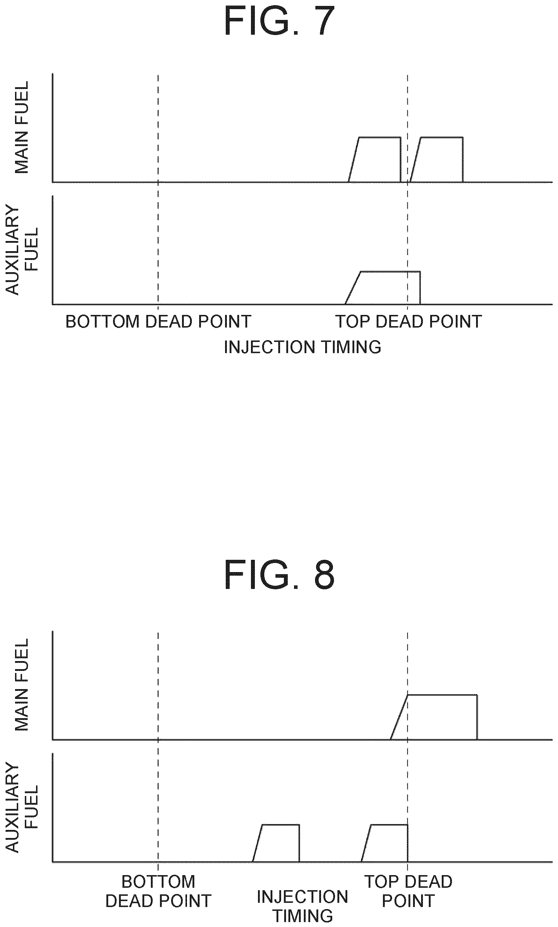

In addition, as a fourth modified example, as illustrated in FIG. 8, the control device 8 controls the fuel injection valve 7 to complete injection of 90% of the total injection volume of the auxiliary fuel before 50% of the total injection volume of the main fuel is injected while injecting the main fuel multiple times in one cycle of the engine 2. For example, in the example illustrated in FIG. 7, the injection of the main fuel is divided into two injections in each of which half the total injection volume is injected, the first injection of the main fuel and the injection of the auxiliary fuel are started to generate the fuel-air mixture of the main fuel and air and the fuel-air mixture of the auxiliary fuel and air are generated in each combustion chamber 31a, the fuel-air mixture of the auxiliary fuel is compressed and ignited, the fuel-air mixture of the main fuel is burned. In addition, the second injection of the main fuel is started to burn the main fuel in each combustion chamber 31a. Note that in the fourth modified example, the number of injections of the main fuel is not limited to two injections, and may be set to three or more injections.

Accordingly, the combustion speed of the main fuel can be controlled by dividing the injection of the main fuel into a plurality of injections, and thus improvement of exhaust gas properties and reduction of fuel consumption can be realized while rapid increases in pressure and temperature and combustion noise caused thereby are suppressed.

Moreover, as a fifth modified example, as illustrated in FIG. 8, the control device 8 controls the fuel injection valve 7 to complete injection of 90% of the total injection volume of the auxiliary fuel before 50% of the total injection volume of the main fuel is injected while injecting the auxiliary fuel multiple times in one cycle of the engine 2. For example, in the example illustrated in FIG. 8, the injection of the auxiliary fuel is divided into two injections in each of which half the total injection volume is injected, the first injection of the auxiliary fuel and the second injection of the auxiliary fuel are started to generate the fuel-air mixture of the auxiliary fuel and air is generated in each combustion chamber 31a, and when the fuel-air mixture of the auxiliary fuel is compressed and ignited, the injection of the main fuel is started to burn the main fuel in each combustion chamber 31a. Note that in the fifth modified example, the number of injections of the auxiliary fuel is not limited to two injections, and may be set to three or more injections.

Accordingly, the combustion timing of the main fuel can be controlled by dividing the injection of the auxiliary fuel into a plurality of injections, and thus improvement of exhaust gas properties and reduction of fuel consumption can be realized while rapid increases in pressure and temperature and combustion noise caused thereby are suppressed.

In the embodiment described above, a configuration example is described in which the fuel injection valve 7 includes the main fuel injection unit 7a including the first valve chamber 21, the first injection hole 23, the first valve element 25, and the first drive unit 27, and the auxiliary fuel injection unit 7b including the second valve chamber 22, the second injection hole 24, the second valve element 26, and the second drive unit 28; however, the present invention is not limited to this example. Alternatively, in another example, the fuel injection valve 7 may include first and second passages through which the main fuel and the auxiliary fuel are respectively supplied to one valve main body and injection holes communicating with the respective passages, and thus can separately supply the main fuel and the auxiliary fuel by switching the first passage and the second passage with respect to the respective injection holes.

Note that the present invention can be appropriately modified without departing from the gist or concept of the invention that can be read throughout the claims and the specification, and an engine device to which such modifications are made is also included in the technical concept of the present invention.

### [Supplementary Notes of the Invention]

Hereinafter, the overview of the invention extracted from the embodiment described above will be additionally described. Note that the configurations and processing functions described in the following supplementary notes can be selected and arbitrarily combined.

### Supplementary Note 1

An engine device, including:
an engine that is operated by burning two types of fuels; and
one fuel injection valve that can individually inject the two types of fuels to the engine,
wherein at the time of injecting a main fuel including a low GHG fuel, which emits less greenhouse gas than a petroleum-based fuel, and a hydrocarbon-based auxiliary fuel as the two types of fuels by the fuel injection valve to the engine, 90% of a total injection volume of the auxiliary fuel is injected before 50% of a total injection volume of the main fuel is injected in one cycle of the engine.

### Supplementary Note 2

The engine device described in Supplementary Note 1, wherein in a state where a fuel-air mixture of the main fuel and air is generated in a combustion chamber of the engine by injection of the main fuel, the auxiliary fuel is injected from a radial center of the combustion chamber.

### Supplementary Note 3

The engine device described in Supplementary Note 1, wherein in a state where a fuel-air mixture of the auxiliary fuel and air is generated in a combustion chamber of the engine by injection of the auxiliary fuel, the main fuel is injected from a radial center of the combustion chamber.

### Supplementary Note 4

The engine device described in Supplementary Note 3, wherein in a state where the auxiliary fuel is ignited in the combustion chamber of the engine by injection of the auxiliary fuel, the main fuel is injected from the radial center of the combustion chamber.

### Supplementary Note 5

The engine device described in any one of Supplementary Notes 1 to 4, wherein the main fuel is injected multiple times in one cycle of the engine.

### Supplementary Note 6

The engine device described in any one of Supplementary Notes 1 to 5, wherein the auxiliary fuel is injected multiple times in one cycle of the engine.

### Supplementary Note 7

The engine device described in any one of Supplementary Notes 1 to 6, wherein the main fuel includes ammonia or alcohol as the low GHG fuel.

### REFERENCE SIGNS LIST

1 Engine device
2 Engine
3 Intake passage
4 Exhaust passage
5 Main fuel supply device
6 Auxiliary fuel supply device
7 Fuel injection valve
7a Main fuel injection unit
7b Auxiliary fuel injection unit
8 Control device
11 Main fuel tank
12 Main fuel supply unit
14 Auxiliary fuel tank
15 Auxiliary fuel supply unit
20 Valve main body
21 First valve chamber
22 Second valve chamber
23 First injection hole
24 Second injection hole
25 First valve element
26 Second valve element
27 First drive unit
28 Second drive unit
30 Cylinder block
31 Cylinder
31a Combustion chamber
32 Crankcase
33 Cylinder
34 Piston
35 Cylinder head
37 Crankshaft
38 Connecting rod
39 Intake port
40 Exhaust port
41 Intake valve
42 Exhaust valve
43 Intake manifold
43a Branch flow passage
44 Exhaust manifold
44a Branch flow passage

## Claims

1. An engine device, comprising:
an engine that is operated by burning two types of fuels; and
one fuel injection valve that can individually inject the two types of fuels to the engine,
wherein at the time of injecting a main fuel including a low GHG fuel, which emits less greenhouse gas than a petroleum-based fuel, and a hydrocarbon-based auxiliary fuel as the two types of fuels by the fuel injection valve to the engine, 90% of a total injection volume of the auxiliary fuel is injected before 50% of a total injection volume of the main fuel is injected in one cycle of the engine.

2. The engine device according to claim 1, wherein in a state where a fuel-air mixture of the main fuel and air is generated in a combustion chamber of the engine by injection of the main fuel, the auxiliary fuel is injected from a radial center of the combustion chamber.

3. The engine device according to claim 1, wherein in a state where a fuel-air mixture of the auxiliary fuel and air is generated in a combustion chamber of the engine by injection of the auxiliary fuel, the main fuel is injected from a radial center of the combustion chamber.

4. The engine device according to claim 3, wherein in a state where the auxiliary fuel is ignited in the combustion chamber of the engine by injection of the auxiliary fuel, the main fuel is injected from the radial center of the combustion chamber.

5. The engine device according to claim 1, wherein the main fuel is injected multiple times in one cycle of the engine.

6. The engine device according to claim 1, wherein the auxiliary fuel is injected multiple times in one cycle of the engine.

7. The engine device according to claim 1, wherein the main fuel includes ammonia or alcohol as the low GHG fuel.
